# EUROPEAN PATENT SPECIFICATION

(11) **EP 3 354 128 B1**
(45) Date of publication and mention of the grant of the patent: **31.05.2023**
(21) Application number: 16848158.8
(22) Date of filing: 23.09.2016
(51) Int. Cl.: A01G 25/16, A01G 25/02, A01C 23/04, A01M 7/00

(54) **IRRIGATION SYSTEM**
BEWÄSSERUNGSSYSTEM
SYSTÈME D'IRRIGATION

(30) Priority: 25.09.2015 CN 201510622329
(43) Date of publication of application: 01.08.2018
(73) Proprietor: Positec Power Tools (Suzhou) Co., Ltd, Suzhou, Jiangsu 215123 (CN)
(72) Inventor: ANDRIOLO, Paolo, Suzhou, Jiangsu 215123 (CN)
(74) Representative: Dentons UK and Middle East LLP
(86) International application number: PCT/CN2016/099897
(87) International publication number: WO 2017/050277

(56) References cited:
- EP-A2- 1 175 143
- CN-A- 104 255 167
- CN-A- 104 381 095
- CN-A- 104 904 400
- US-A1- 2014 283 451
- US-B1- 8 434 697
- US-B2- 6 874 707

## Description

### BACKGROUND

### Technical Field

The present invention relates to an irrigation system, and in particular, to an irrigation system of multiple irrigation liquids.

### Related Art

It is known to all that management of gardening and crops is an arduous task, and irrigation is a very important part. Because different crops have different demands on water, fertilizer, or pesticide in the same period, and a user needs to provide water or fertilizer or pesticide at proper time according to growth conditions of the crops. Therefore, the user needs to purchase a corresponding irrigation device and a pesticide or fertilizer spraying device, increasing management costs.

To resolve the problem, an integrated water-fertilizer irrigation device appears in the market, so that user management costs are reduced. A current integrated water-fertilizer irrigation device usually needs to set a transport pipe for each irrigation area corresponding to each irrigation liquid to transport the corresponding irrigation liquid. When there are relatively many irrigation areas, many transport pipes are distributed on the irrigation areas, increasing difficulty of arrangement of pipelines by the user and seriously affecting appearance of the irrigation areas.

US 6874707 B discloses a system for automating the growing of crops, such as grapevines. Combinations of data from sensors local to a vineyard, and from optional remote stations and sensors, is combined with a control system to accurately control the dispensing of water and chemicals such as insecticides, disease prevention fungicides and fertilizers. The materials are dispensed through a multiple channel conduit which allows conflicting, or incompatible, types of materials to be transported through a common assembly. Sensors are attached to the conduit so that the placement of sensors can occur simultaneously with the laying of the conduit.

US 8434697 B discloses an injection apparatus for automatically applying pest control concentrates and fertilizers into an existing underground irrigation system. The apparatus uses an electronic control system programmed to activate one or more injection pumps and to also operate the zonal flow control solenoids contained in an existing underground or other type of irrigation system. The apparatus includes a single or plurality of storage reservoirs for storing one or more additives with piping to deliver these additives to the existing irrigation system.

US 2014/283451 A discloses systems and methods configured to deliver fluids to an array of plant deliver different fluids to different plants or groups of plants. The fluids include one or more of nutrients, dyes, insecticides, and/or herbicides. Delivery may be controlled such that a graphic and/or image is depicted by an array of plants or groups of plants.

### SUMMARY

Based on the above, it is necessary to provide an irrigation system capable of reducing a quantity of transport pipelines for the foregoing problem.

The present invention provides an irrigation system, comprising: a supply module, comprising a plurality of supply apparatuses for storing a plurality of feeding liquids; a transport pipeline, connected with the supply module for transporting the feeding liquids, wherein the transport pipeline comprises one transport pipe which extends from the supply module to a plurality of irrigation areas to transport different feeding liquids from the supply module through a same segment of the one transport pipe to the plurality of irrigation areas; a spraying module, comprising a plurality of sprayers connected with the transport pipe of the transport pipeline and spraying the feeding liquids, wherein at least two sprayers are connected with the transport pipeline at a certain distance from each other to be located at different irrigation areas; and a control module, controlling the irrigation system to work, where the control module controls the supply module to provide different feeding liquids at different times through the one transport pipe such that the different feeding liquids pass through the same segment of the one transport pipe of the transport pipeline at different times and flow to an irrigation area.

Preferably, the control module controls at least two of the plurality of sprayers to spray different feeding liquids at different time.

Preferably, the at least two of the plurality of sprayers are connected with the transport pipeline at a certain distance from each other.

Preferably, the control module controls the plurality of supply apparatuses and the plurality of sprayers to form a one-to-one working mode, a supply apparatus supplies a feeding liquid, and a corresponding sprayer performs a spraying operation.

Preferably, the control module controls the plurality of supply apparatuses and the plurality of sprayers to form a one-to-many working mode, a supply apparatus supplies a feeding liquid, and corresponding multiple sprayers perform a spraying operation.

Preferably, the feeding liquid comprises a nutrient solution or liquid fertilizer or liquid pesticide.

Preferably, the irrigation system further comprises a water-supply module, connected with the transport pipeline for providing water to the irrigation area.

Preferably, the control module controls the water-supply module and the supply module to provide water or/and the feeding liquids to the irrigation area at different time or at the same time.

Preferably, the control module comprises a first valve for controlling the supply module, a second valve for controlling the water-supply module, and a control circuit or control chip, and the control circuit or control chip is connected to the first valve and the second valve to control opening and closing of the first valve and the second valve.

Preferably, the control module comprises a wireless communications apparatus, configured to perform wireless communication with a mobile device.

Preferably, the control module receives, by using the wireless communication apparatus, a control instruction sent by the mobile device and controls the irrigation system to work according to the control instruction.

Preferably, the control instruction comprises an irrigation start instruction and an irrigation end instruction.

Preferably, the control instruction comprises an instruction for automatically performing periodic irrigation.

Preferably, the control module sends data related to irrigation to the mobile device by using the wireless communication apparatus, for the mobile device to perform data statistics and analysis.

Preferably, the data related to irrigation comprises duration time of irrigation, flow capacity of irrigation, a date of irrigation.

Preferably, the spraying module further comprises a wireless communication unit and a control unit, the control unit is connected to the wireless communication unit and the sprayers respectively, the wireless communication unit receives a control command sent by the mobile device, and the control unit controls the sprayers , according to the received control command, to perform a spraying operation at different time or at the same time.

The present invention further provides a method for controlling an irrigation system, comprising: a supply module, comprising a plurality of supply apparatuses for storing a plurality of feeding liquids; a transport pipeline, connected with the supply module for transporting the feeding liquids, wherein the transport pipeline comprises one transport pipe which extends from the supply module to a plurality of irrigation areas; a spraying module, comprising a plurality of sprayers connected with the one transport pipe of the transport pipeline and configured to spray the feeding liquids to an irrigation area, wherein at least two sprayers are connected with the one transport pipe at a certain distance from each other at different irrigation areas; and a control module, controlling the irrigation system, where the control module controls the supply module to provide a first feeding liquid within a first time period, the control module controls the supply module to provide a second feeding liquid within a second time period, and the first feeding liquid and the second feeding liquid pass through a same segment of the one transport pipe of the transport pipeline at different times.

Preferably, he control module controls the first sprayer to spray the first feeding liquid within the first time period, and the control module controls the second sprayer to spray the second feeding liquid within the second time period.

Compared with the prior art, the irrigation system in the present invention can reduce a quantity of transport pipelines. The irrigation system makes irrigation liquids share a same segment of the transport pipeline at different time, reducing the quantity of transport pipelines, lowering difficulty of arrangement of pipelines by the user, and no longer affecting appearance of the irrigation area. Because the quantity of transport pipelines is reduced, the user no longer needs to purchase multiple transport pipes, so as to lower irrigation costs.

### BRIEF DESCRIPTION OF THE DRAWINGS

The foregoing objective, technical solutions, and beneficial effects of the present invention can be clearly obtained through the following detailed descriptions capable of implementing specific embodiments of the present invention and with reference to descriptions of accompanying drawings.

Same signs and symbols in the accompanying drawings and the specification are used to represent same or equal elements.
FIG. 1 is a schematic diagram that an irrigation system implements irrigation on a first irrigation area A according to an implementation of the present invention;
FIG. 2 is a schematic diagram that the irrigation system shown in FIG. 1 implements irrigation on a second irrigation area B;
FIG. 3 is a schematic diagram that the irrigation system shown in FIG. 1 implements irrigation on a third irrigation area C;
FIG. 4 is a schematic diagram of an irrigation system according to an alternative arrangement which is not part of this invention;
FIG. 5 is a schematic diagram of an irrigation system according to an alternative arrangement which is not part of this invention;
FIG. 6 is a schematic diagram of an irrigation system according to another implementation; and
FIG. 7 is a schematic diagram of a display interface of a mobile device related to an irrigation system according to the present invention.

| | | | |
|---|---|---|---|
| 1. | irrigation system | 2. | supply module |
| 21. | first supply apparatus | 22. | second supply apparatus |
| 23. | third supply apparatus | 3. | control module |
| 4. | transport pipeline | 5. | spraying module |
| 51. | first sprayer | 52. | second sprayer |
| 53. | third sprayer | 6. | mobile device |
| 7. | water-supply module | A. | first irrigation area |
| B. | second irrigation area | C. | third irrigation area |
| I. | first display interface | II. | second display interface |
| III. | third display interface | | |

### DETAILED DESCRIPTION

Implementations of the present invention are described in detail with reference to the accompanying drawings in the following, so that advantages and features of the present invention can be more easily understood by a person skilled in the art, so as to make a clearer and more specific definition to the protection scope of the present invention. The accompanying drawings are used as only references and descriptions and are not used to limit the present invention.

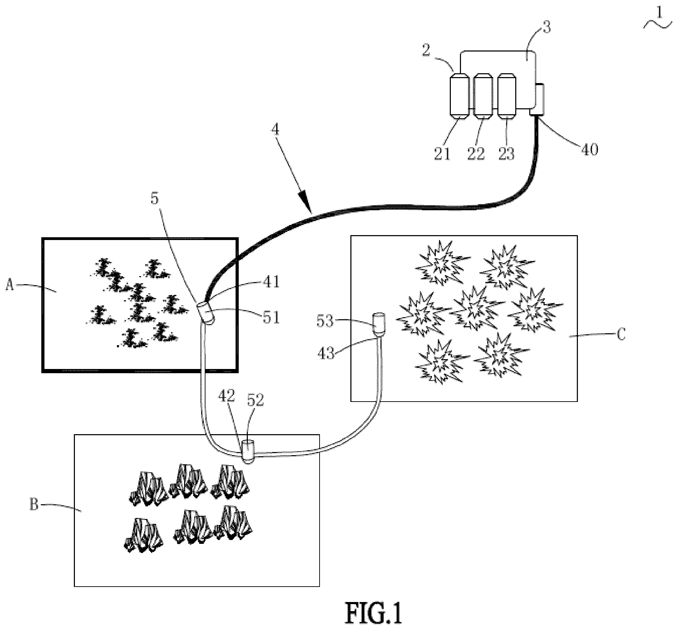

As shown in FIG. 1, FIG. 1 is a schematic diagram that an irrigation system implements irrigation on a first irrigation area A according to an embodiment. In this embodiment, an irrigation area is divided into the first irrigation area A, a second irrigation area B, and a third irrigation area C according to different planted plants. Corresponding plants, such as different types of flowers, grass, or other crops, are planted in each irrigation area. It is known to a person skilled in the art that a quantity of irrigation areas may vary according to a specific situation.

The irrigation system 1 includes a supply module 2 for providing a feeding liquid to an irrigation area, a transport pipeline 4 for transporting the feeding liquid to the irrigation area, a spraying module 5 connected with the transport pipeline, and a control module 3. The control module 3 controls the supply module 2 to provide a plurality of feeding liquids at different time, and the plurality of feeding liquids pass through a same segment of the transport pipeline 4 at different time and are transported to the irrigation area. The spraying module 5 performs a spraying operation on different irrigation areas at different time or at the same time.

The supply module 2 includes a plurality of supply apparatuses storing a plurality of feeding liquids, and the plurality of supply apparatuses store at least two different feeding liquids. In this embodiment, the supply module 2 includes a first supply apparatus 21, a second supply apparatus 22, and a third supply apparatus 23, and each supply apparatus stores a different feeding liquid. A specific form of the supply apparatus may be a storage apparatus such as a storage tube or a storage pool. The feeding liquid stored in the supply apparatus includes a nutrient solution, liquid fertilizer, or liquid pesticide. Specific types of feeding liquids, for example, a nutrient solution and liquid pesticide respectively or different types of nutrient solutions, are deposited by the user according to needs of plants in the irrigation areas. It is known to a person skilled in the art that a quantity of supply apparatuses may vary according to types of the feeding liquids needed by the irrigation areas, and the quantity of supply apparatuses does not impose a limitation to the present invention. It is known to a person skilled in the art that a relationship between the quantity N of supply apparatuses and a quantity M of types of the stored feeding liquids is N ≥ M(N ≥ 2, M ≥ 2)

The transport pipeline 4 is connected with the supply module 2, transporting the feeding liquids in the supply module 2 to the irrigation areas. As shown in FIG. 1, in this embodiment, the transport pipeline 4 includes one transport pipe, and the transport pipe extends from the supply module 2 to the plurality of irrigation areas. The spraying module 5 is connected with the transport pipeline 4 and is configured to spray the feeding liquids to the irrigation areas. It is known to a person skilled in the art that one transport pipe includes not only a situation in which the transport pipe is integrally formed but also a situation in which multiple segments of a transport pipe are connected by connectors. The spraying module 5 includes a plurality of sprayers, and at least two sprayers are connected with the transport pipeline 4 at a certain distance from each other. In this embodiment, there are three sprayers in total, respectively a first sprayer 51, a second sprayer 52, and a third sprayer 53. Each sprayer is connected to the pipeline 4 at a certain distance from another, so that the sprayers are located at different irrigation areas. As shown in FIG. 1, the first sprayer 51 is located in the first irrigation area A, the second sprayer 52 is located in the second irrigation area B, and the third sprayer 53 is located in the third irrigation area C. It is known to a person skilled in the art that each irrigation area may have multiple sprayers performing a spraying operation.

The control module 3 is connected to the supply module 2 and controls a working condition of the irrigation system 1, including controlling which supply apparatus in the supply module 2 to provide the feeding liquid, flow capacity of the provided feeding liquid, and the like. The control module 3 includes a first valve (not shown in the figure) for controlling the supply module, and a control circuit or control chip (not shown in the figure), and the control circuit or control chip is connected to the first valve and controls opening and closing of the first valve. The control apparatus may control specifically, by controlling opening and closing of the first valve, which supply apparatus provides the feeding liquid. The control apparatus may control, by controlling a time of opening or closing of the first valve or a size of opening, flow capacity of the feeding liquid flowing to the irrigation area. The control module 3 may further control the sprayers to perform a spraying operation. For example, the control module 3 controls at least two of the plurality of sprayers to spray different feeding liquids at different time.

The following specifically describes a specific working process of the irrigation system 1 in different working modes. The irrigation system 1 has different working modes, to satisfy demands of plants in different irrigation areas for different feeding liquids.

In a first working mode, the feeding liquids stored in the supply apparatuses and plants planted in the irrigation areas are in one-to-one correspondence, and the control module 3 controls the plurality of supply apparatuses and the plurality of sprayers to form one-to-one correspondence. In this embodiment, the feeding liquid stored in the supply apparatus 21 is specially supplied to plants within the first irrigation area A, the feeding liquid stored in the supply apparatus 22 is specially supplied to plants within the second irrigation area B, and the feeding liquid stored in the supply apparatus 23 is specially supplied to plants within the third irrigation area C. A specific irrigation process is as follows.

As shown in FIG. 1, when plants in the first working area A need a feeding liquid, the control module 3 controls only the supply apparatus 21 to provide the feeding liquid and controls the first sprayer 51 located in the first working area A to perform a spraying operation, while the second sprayer 52 located in the second working area B and the third sprayer 53 located in the third working area C are closed. In the irrigation process, the feeding liquid in the supply apparatus 21 passes through a segment from 40 to 41 of the transport pipeline 4, as shown in FIG. 1 the black filled segment of the transport pipeline 4.

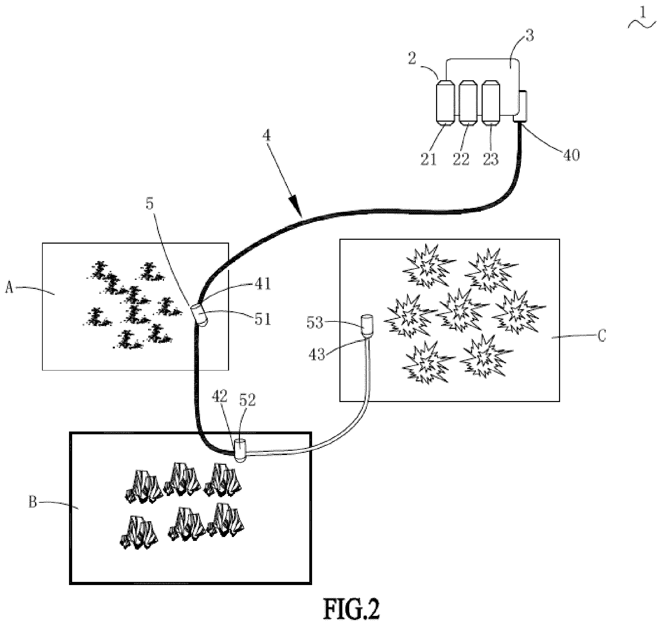

As shown in FIG. 2, when plants in the second working area B need a feeding liquid, the control module 3 controls only the supply apparatus 22 to provide the feeding liquid and controls the second sprayer 52 located in the second working area B to perform a spraying operation, while the first sprayer 51 located in the first working area A and the third sprayer 53 located in the third working area C are closed. In the irrigation process, the feeding liquid in the supply apparatus 22 passes through a segment from 40 to 42 of the transport pipeline 4, as shown in FIG.2 the black filled segment of the transport pipeline 4. The feeding liquid in the supply apparatus 22 and the feeding liquid in the supply apparatus 21 pass through a same segment, that is, segment from 40 to 41, of the transport pipeline 4 at different time.

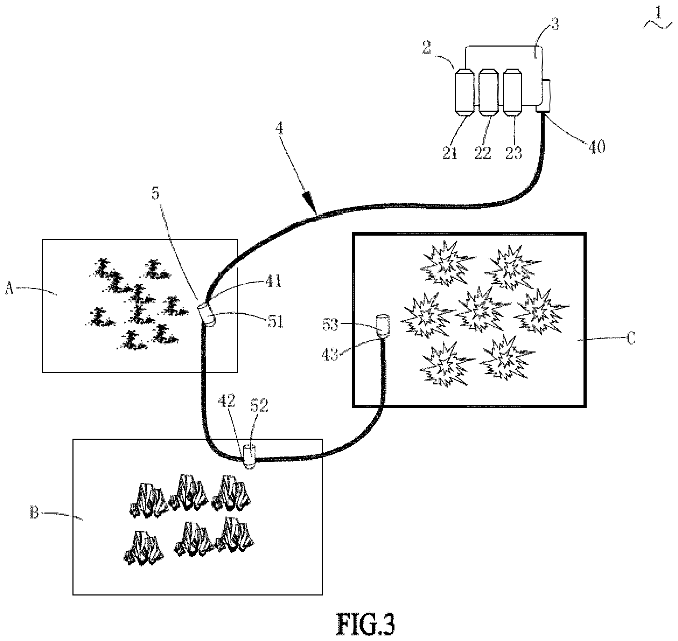

As shown in FIG. 3, when plants in the third working area C need a feeding liquid, the control module 3 controls only the supply apparatus 23 to provide the feeding liquid and controls the third sprayer 53 located in the third working area C to perform a spraying operation, while the first sprayer 51 located in the first working area A and the second sprayer 52 located in the second working area B are closed. In the irrigation process, the feeding liquid in the supply apparatus 23 passes through a segment from 40 to 43 of the transport pipeline 4, as shown in FIG.3 the black filled segment of the transport pipeline 4. The feeding liquid in the supply apparatus 23 and the feeding liquid in the supply apparatus 22 pass through a same segment, that is, segment from 40 to 42, of the transport pipeline 4 at different time. The feeding liquid in the supply apparatus 23 and the feeding liquid in the supply apparatus 21 pass through a same segment, that is, segment from 40 to 41, of the transport pipeline 4 at different time.

In this working mode, the control module 3 controls the supply module 2 to provide several feeding liquids at different time, and the several feeding liquids pass through a same segment of the transport pipeline 4 at different time, and the feeding liquids are transported to the irrigation areas. The control module 3 controls spraying apparatuses corresponding to the supply apparatuses to perform a spraying operation at different time, to irrigate needed feeding liquids to plants within different irrigation areas.

In a second working mode, the feeding liquids stored in the supply apparatuses and plants planted in the irrigation areas are in one-to-many correspondence, and the control module 3 controls the plurality of supply apparatuses and the plurality of sprayers to form one-to-many correspondence.

Plants within different irrigation areas may simultaneously have a demand on a same feeding liquid. For example, plants in the first irrigation area A and the second irrigation area B simultaneously need the feeding liquid stored in the supply apparatus 21. The control module 3 controls only the supply apparatus 21 to provide the feeding liquid and controls the first sprayer 51 located in the first irrigation area A and the second sprayer 52 located in the second irrigation area B to simultaneously perform a spraying operation.

For example, plants in the first irrigation area A and the second irrigation area B simultaneously need the feeding liquid stored in the supply apparatus 22. The control module 3 controls only the supply apparatus 22 to provide the feeding liquid and controls the first sprayer 51 in the first irrigation area A and the second sprayer 52 in the second irrigation area B to simultaneously perform a spraying operation. The feeding liquid in the supply apparatus 22 and the feeding liquid in the supply apparatus 21 pass through the segment from 40 to 42 of the transport pipeline 4 at different time.

In this working mode, several feeding liquids pass through a same segment of the transport pipeline at different time, and the feeding liquids are transported to the irrigation areas. The control module controls several sprayers corresponding to the supply apparatus to simultaneously perform a spraying operation, to irrigate needed feeding liquids to plants within different irrigation areas.

In a third working mode, the correspondence between the feeding liquids stored in the supply apparatuses and plants planted in the irrigation areas may vary along with growth processes of the plants. The correspondence between the plurality of supply apparatuses and the plurality of sprayers controlled by the control module 3 vary along with the growth processes of the plants.

Different plants need different feeding liquids at different growth processes. For example, plants in the first irrigation area A need the feeding liquid in the supply apparatus 21 at a seedling period, and the control module 3 controls the supply apparatus 21 to provide the feeding liquid and controls the first sprayer 51 to perform a spraying operation. Plants in the first irrigation area A need the feeding liquid in the supply apparatus 23 at a mature period, and the control module 3 controls the supply apparatus 23 to provide the feeding liquid and controls the first sprayer 51 to perform a spraying operation. The feeding liquid in the supply apparatus 21 and the feeding liquid in the supply apparatus 23 pass through the segment from 40 to 41 of the transport pipeline 4 at different time.

In this working mode, several feeding liquids pass through a same segment of the transport pipeline at different time, and the feeding liquids are transported to the irrigation areas. The correspondence between the supply apparatuses and the spraying apparatuses controlled by the control module 3 vary along with growth periods of plants, so as to provide different feeding liquids at different periods of plants.

In different working modes, the irrigation system 1 may realize that the control module 3 controls at least two of the plurality of sprayers to respectively spray different feeding liquids at different time. It is known to a person skilled in the art that the irrigation system 1 may also realize that the control module 3 controls at least two sprayers of the plurality of sprayers to simultaneously spray a same feeding liquid. According to working processes under the foregoing different working modes, it is learned that a method for controlling the irrigation system 1 is that: the control module 3 controls the supply module 2 to provide a first feeding liquid within a first time period; the control module 3 controls the supply module 2 to provide a second feeding liquid within a second time period; the first feeding liquid and the second feeding liquid pass through a same segment of the transport pipeline 4 at different time.

The method for controlling the irrigation system 1 further includes: the plurality of sprayers includes at least two sprayers, a first sprayer and a second sprayer are connected with the transport pipeline at a certain distance from each other, the control module 3 controls the first sprayer to spray the first feeding liquid within the first time period, and the control module 3 controls the second sprayer to spray the second feeding liquid within the second time period.

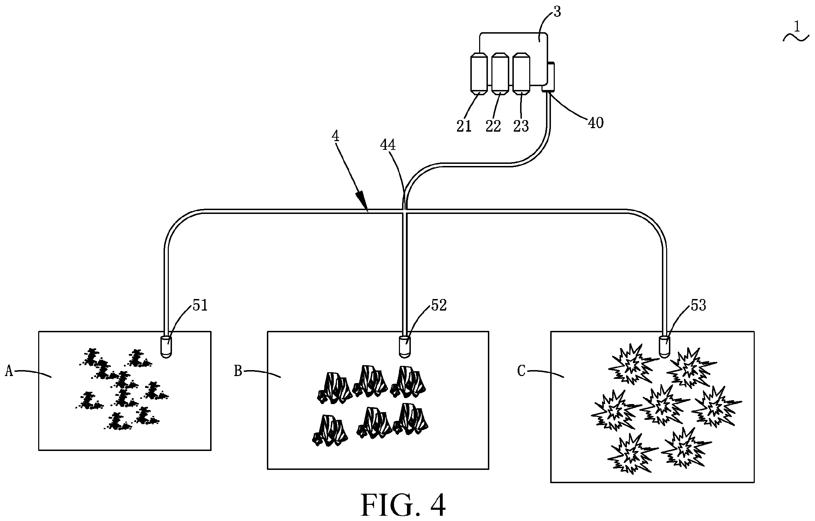

As shown in FIG. 4, in an alternative arrangement which is not part of this invention, the transport pipeline 4 includes one main transport pipe and a plurality of branch transport pipes. The main transport pipe is connected with the branch transport pipes respectively. Here, the main transport pipe is connected with the supply module 2, and the branch transport pipes respectively extend to different working areas. The spraying module 5 includes a plurality of sprayers, and at least two sprayers are connected with the branch transport pipes at a certain distance from each other. For example, a first sprayer 51, a second sprayer 52, and a third sprayer 53 are respectively connected with the branch transport pipes, located in different irrigation areas, and spray the feeding liquids to the different irrigation areas. The control module 3 controls the supply module 2 to provide several stored feeding liquids at different time, and the several feeding liquids pass through a same segment, segment from 40 to 44, of the transport pipeline 4 at different time. It is known to a person skilled in the art that multiple sprayers may be connected with a same branch transport pipe, that is, a same irrigation area has multiple sprayers.

In figure 4, the transport pipeline 4 includes one main transport pipe and a plurality of branch transport pipes. The main transport pipe is connected with the branch transport pipes respectively. The main transport pipe extends to multiple different irrigation areas. The main transport pipe is connected to a plurality of sprayers, and at least two sprayers are located in different irrigation areas at a certain distance from each other. The multiple branch transport pipes are connected with the main transport pipe. The branch transport pipes respectively extend to different irrigation areas, sprayers are connected with the branch transport pipes, and the sprayers spray the feeding liquids to corresponding irrigation areas. The control module 3 controls the supply module 2 to provide several stored feeding liquids at different time, and the several feeding liquids pass through a same segment of the main transport pipe at different time.

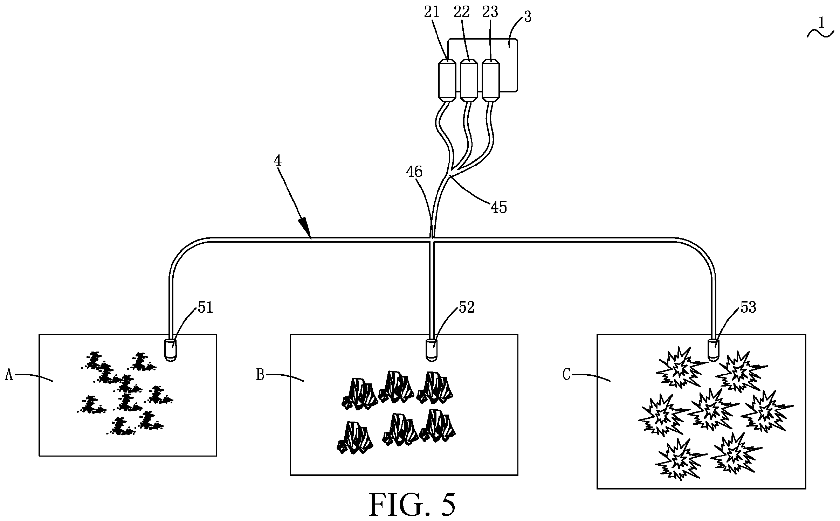

As shown in FIG. 5, in an alternative arrangement which is not part of this invention the transport pipeline 4 includes one main transport pipe and a plurality of branch transport pipes. The main transport pipe is connected with the branch transport pipes respectively. The branch transport pipes are divided into first-part branch transport pipes connected to the supply module 2 and second-part branch transport pipes extending to the irrigation areas. Two parts of branch transport pipes are both connected with the main transport pipe. In this figure, the first-part branch transport pipes are respectively connected with the supply apparatuses 21, 22, and 23, and the second-part branch transport pipes respectively extend to the first irrigation area A, the second irrigation area B, and the third irrigation area C. The spraying module 5 includes a plurality of sprayers, and at least two sprayers are connected to the branch transport pipes at a certain distance from each other. For example, the first sprayer 51, the second sprayer 52, and the third sprayer 53 respectively connected to the second-part branch transport pipes, are located in different irrigation areas, and spray feeding liquids to the different irrigation areas. The control module 3 controls the supply module 2 to provide several stored feeding liquids at different time, and the several feeding liquids pass through a same segment, segment from 45 to 46, of the transport pipeline 4 at different time. It is known to a person skilled in the art that multiple sprayers may be connected with a same branch transport pipe of the second-part branch transport pipes, that is, a same irrigation area has multiple sprayers. A quantity of the first-part branch transport pipes is equal to a quantity of supply apparatuses, and a quantity of the second-part branch transport pipes is equal to a quantity of the irrigation areas.

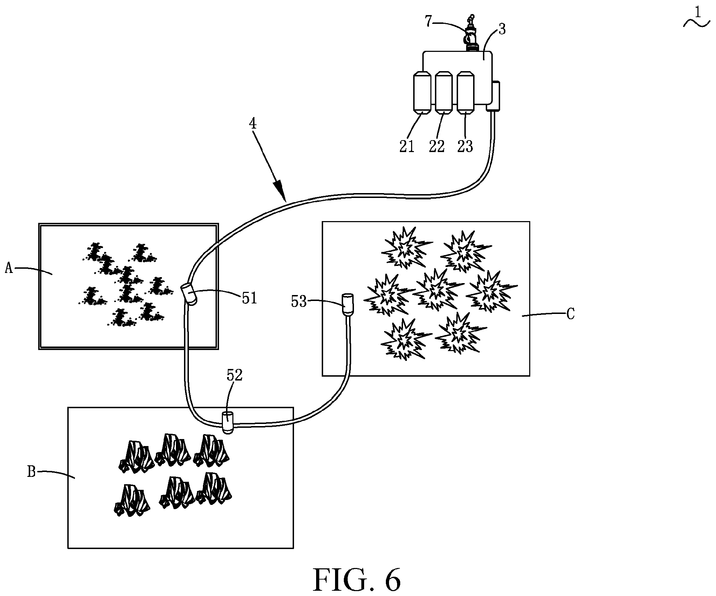

As shown in FIG. 6, in an embodiment, the irrigation system 1 further includes a water-supply module 7. The water-supply module 7 is connected with the transport pipeline 4 to provide water to the irrigation areas. A specific form of the water-supply module 7, such as a pool and a pump or a faucet commonly used in families, is well known to a person skilled in the art.

The control module 3 controls the water-supply module 7 and the supply module 2 to provide water or/and feeding liquids to the irrigation areas at different time or at the same time. The control module 3 includes a first valve(not shown in the figure) for controlling the supply module 2, a second valve (not shown in the figure) for controlling the water-supply module 7, and a control circuit or control chip (not shown in the figure), and the control circuit or control chip is connected to the first valve and the second valve to control opening and closing of the first valve and the second valve. When the control module 3 controls the first valve to be opened and the second valve to be closed, the supply module 2 provides the feeding liquids to the irrigation areas. When the control module 3 controls the first valve to be closed and the second valve to be opened, the water-supply module 7 provides water to the irrigation areas. When the control module 3 controls the first valve to be opened and the second valve to be opened, the supply module 2 and the water-supply module 7 simultaneously provide mixed liquid of feeding liquid and water to the irrigation areas.

In an embodiment, the control module 3 further includes a wireless communication apparatus (not shown in the figure), configured to perform wireless communication with a mobile device 6. The wireless communication apparatus may be a WiFi apparatus, a cellular mobile communication apparatus, a Bluetooth apparatus, a Zigbee apparatus, or an apparatus of another type implementing wireless communication. The mobile device 6 includes a mobile phone, a PC, a tablet computer, or other various portable control apparatuses with control interface. The control module 3 receives, by using the wireless communication apparatus, a control command sent by the mobile device 6 and controls the irrigation system 1 to work according to the sent control command.

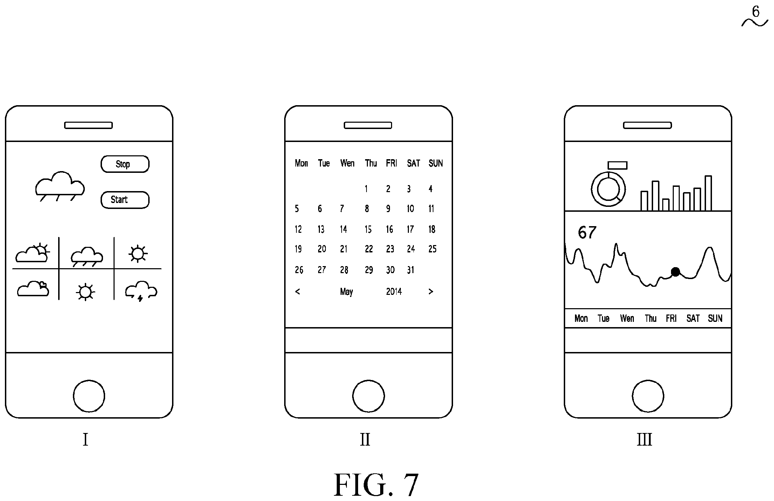

In an embodiment, the control command includes an irrigation start command and an irrigation end command. As shown in FIG. 7, the mobile device has an application control program related to the irrigation system 1, and the application control program has a first display interface I. On the first display interface I, information related to weather and a control key are displayed, and a user determines, according to weather information, whether the irrigation system needs to be started. When the irrigation system needs to be started, the user presses a corresponding start key to remotely start the irrigation system. When irrigation is no longer needed, the user presses a corresponding close key to remotely close the irrigation system.

In an embodiment, the control command includes a command for automatically performing periodic irrigation. As shown in FIG. 7, the mobile device has an application control program related to the irrigation system 1, and the application control program has a second display interface II. On the second display interface II, a user may select a date on which irrigation is needed or duration of irrigation of each time period. The irrigation system 1 may automatically perform irrigation according to an irrigation period set by the user.

In an embodiment, the control module 3 sends data related to irrigation to the mobile device 6 by using the wireless communication apparatus, for the mobile device 6 to perform data statistics and analysis. The data related to irrigation includes time of irrigation, flow capacity of irrigation, and a date of irrigation. As shown in FIG. 7, the mobile device has an application control program related to the irrigation system 1, and the application control program has a third display interface III. On the third display interface III, the related data that collected is presented in a graphical form to a user.

In an embodiment, the spraying module 5 further includes a wireless communication unit (not shown in the figure) and a control unit (not shown in the figure). The control unit is connected to the wireless communication unit and the sprayers respectively. The wireless communication unit receives a control command sent by the mobile device 6, and the control unit controls, according to the control command, the sprayers to perform a spraying operation at different time or at the same time. A user may remotely control each sprayer to start or end the spraying operation.

The foregoing embodiments express only several implementations of the present invention and are described relatively specifically and in detail, but cannot be understood as limitation to the patent scope. It should be noted that for a person of ordinary skill in the art various transformations and improvements can further be made without departing from the present invention and all fall within the protection scope of the present invention Therefore, the protection scope of the patent should be subject to the appended claims.

## Claims

1. An irrigation system (1), comprising:
a supply module (2), comprising a plurality of supply apparatuses (21, 22, 23) for storing a plurality of feeding liquids;
a transport pipeline (4), connected with the supply module (2) for transporting the feeding liquids, wherein the transport pipeline (4) comprises one transport pipe which extends from the supply module (2) to a plurality of irrigation areas (A, B, C) to transport different feeding liquids from the supply module through a same segment of the one transport pipe to the plurality of irrigation areas;
a spraying module (5), comprising a plurality of sprayers (51, 52, 53) connected with the transport pipe of the transport pipeline (4) to spray the feeding liquids, wherein at least two sprayers are connected with the one transport pipe at a certain distance from each other to be located at different irrigation areas;
a control module (3), for controlling the irrigation system (1), wherein the control module (3) controls the supply module (2) to provide different feeding liquids at different times through the one transport pipe such that the different feeding liquids pass through same segment of the one transport pipe of the transport pipeline (4) at different times and flow to an irrigation area (A, B, C).

2. The irrigation system according to claim 1, wherein the control module (3) controls at least two of the plurality of sprayers (51, 52, 53) to spray different feeding liquids at different times, wherein optionally the at least two of the plurality of sprayers (51, 52, 53) are connected with the transport pipeline (4) at a certain distance from each other.

3. The irrigation system according to claim 1, wherein the transport pipeline (4) comprises a plurality of branch transport pipes, the transport pipe is connected with the branch transport pipes respectively, and the spraying module (5) is connected with the branch transport pipes.

4. The irrigation system according to claim 1, wherein:
the control module (3) controls the plurality of supply apparatuses (21, 22, 23) and the plurality of sprayers (51, 52, 53) to form a one-to-one working mode, a supply apparatus (21, 22, 23) supplies a feeding liquid, and a corresponding sprayer (51, 52, 53) performs a spraying operation; or
the control module (3) controls the plurality of supply apparatuses (21, 22, 23) and the plurality of sprayers (51, 52, 53) to form a one-to-many working mode, a supply apparatus (21, 22, 23) supplies a feeding liquid, and corresponding multiple sprayers (51, 52, 53) perform a spraying operation.

5. The irrigation system according to claim 1, wherein the irrigation system (1) further comprises a water-supply module (7), connected with the transport pipeline (4) for providing water to the irrigation area (A, B, C).

6. The irrigation system according to claim 5, wherein the control module (3) controls the water-supply module (7) and the supply module (2) to provide water or/and the feeding liquids to the irrigation area (A, B, C) at different times or at the same time, wherein optionally the control module (3) comprises a first valve for controlling the supply module (2), a second valve for controlling the water-supply module (7), and a control circuit or control chip, and the control circuit or control chip is connected to the first valve and the second valve to control opening and closing of the first valve and the second valve.

7. The irrigation system according to claim 1, wherein the control module (3) comprises a wireless communications apparatus, configured to perform wireless communication with a mobile device (6).

8. The irrigation system according to claim 7, wherein the control module (3) receives, by using the wireless communication apparatus, a control instruction sent by the mobile device (6) and controls the irrigation system (1) to work according to the control instruction.

9. The irrigation system according to claim 8, wherein the control instruction comprises: an irrigation start instruction and an irrigation end instruction; or
an instruction for automatically performing periodic irrigation.

10. The irrigation system according to claim 7, wherein the control module (3) sends data related to irrigation to the mobile device (6) by using the wireless communication apparatus, for the mobile device (6) to perform data statistics and analysis, wherein the data related to irrigation optionally comprises duration time of irrigation, flow capacity of irrigation, a date of irrigation.

11. The irrigation system according to claim 7, wherein the spraying module (5) further comprises a wireless communication unit and a control unit, the control unit is connected to the wireless communication unit and the sprayers (51, 52, 53) respectively, the wireless communication unit receives a control command sent by the mobile device (6), and the control unit controls the sprayers (51, 52, 53), according to the received control command, to perform a spraying operation at different time or at the same time.

12. The irrigation system according to claim 1, wherein control module is configured to independently control each of the plurality of sprayers (51, 52, 53) connected with the transport pipe of the transport pipeline.

13. A method for controlling an irrigation system (1) comprising a supply module (2), comprising a plurality of supply apparatuses (21, 22, 23) for storing a plurality of feeding liquids; a transport pipeline (4), connected with the supply module (2) for transporting the feeding liquids, wherein the transport pipeline (4) comprises one transport pipe which extends from the supply module (2) to a plurality of irrigation areas (A, B, C); a spraying module (5), comprising a plurality of sprayers (51, 52, 53) connected with the one transport pipe of the transport pipeline (4) and configured to spray the feeding liquids to an irrigation area (A, B, C), wherein at least two sprayers are connected with the one transport pipe at a certain distance from each other at different irrigation areas; and a control module (3), controlling the irrigation system (1), the method comprising:
controlling the supply module (2) to provide a first feeding liquid within a first time period and to provide a second feeding liquid within a second time period, and passing the first feeding liquid and the second feeding liquid through a same segment of the one transport pipe of the transport pipeline (4) at different times.

14. The method for controlling an irrigation system according to claim 13, wherein the plurality of sprayers (51, 52, 53) comprises at least two sprayers, a first sprayer and a second sprayer are connected with the transport pipeline (4) at a certain distance from each other; wherein the first sprayer is controlled to spray the first feeding liquid within the first time period, and the second sprayer is controlled to spray the second feeding liquid within the second time period.

15. The method according to claim 13, wherein the feeding liquid comprises a nutrient solution or liquid fertilizer or liquid pesticide.

16. The method according to claim 13, wherein control module is configured to independently control each of the plurality of sprayers (51, 52, 53) connected with the transport pipe of the transport pipeline.

## Patentansprüche

1. Bewässerungsanlage (1), umfassend:
ein Versorgungsmodul (2), umfassend eine Vielzahl von Versorgungseinrichtungen (21, 22, 23) zum Speichern einer Vielzahl von Zuführflüssigkeiten;
eine Transportrohrleitung (4), die mit dem Versorgungsmodul (2) zum Transportieren der Zuführflüssigkeiten verbunden ist, wobei die Transportrohrleitung (4) eine Transportrohrleitung umfasst, die sich von dem Versorgungsmodul (2) zu einer Vielzahl von Bewässerungsbereichen (A, B, C) erstreckt, um unterschiedliche Zuführflüssigkeiten von dem Versorgungsmodul durch ein gleiches Segment des einen Transportrohrs hindurch zu der Vielzahl von Bewässerungsbereichen zu transportieren;
ein Sprühmodul (5), umfassend eine Vielzahl von Sprühvorrichtungen (51, 52, 53), die mit dem Transportrohr der Transportrohrleitung (4) verbunden ist, um die Zuführflüssigkeiten zu sprühen, wobei mindestens zwei Sprühvorrichtungen mit dem einen Transportrohr in einem bestimmten Abstand voneinander verbunden sind, um sich an unterschiedlichen Bewässerungsbereichen zu befinden;
ein Steuermodul (3) zum Steuern der Bewässerungsanlage (1), wobei das Steuermodul (3) das Versorgungsmodul (2) steuert, um unterschiedliche Zuführflüssigkeiten zu unterschiedlichen Zeiten durch das eine Transportrohr hindurch derart bereitzustellen, dass die unterschiedlichen Zuführflüssigkeiten durch das gleiche Segment des einen Transportrohrs der Transportrohrleitung (4) zu unterschiedlichen Zeiten hindurch passieren und zu einem Bewässerungsbereich (A, B, C) fließen.

2. Bewässerungsanlage nach Anspruch 1, wobei das Steuermodul (3) mindestens zwei der Vielzahl von Sprühvorrichtungen (51, 52, 53) steuert, um unterschiedliche Zuführflüssigkeiten zu unterschiedlichen Zeiten zu sprühen, wobei optional die mindestens zwei der Vielzahl von Sprühvorrichtungen (51, 52, 53) in einem bestimmten Abstand voneinander mit der Transportrohrleitung (4) verbunden sind.

3. Bewässerungsanlage nach Anspruch 1, wobei die Transportrohrleitung (4) eine Vielzahl von Zweigtransportrohren umfasst, das Transportrohr jeweils mit den Zweigtransportrohren verbunden ist und das Sprühmodul (5) mit den Zweigtransportrohren verbunden ist.

4. Bewässerungsanlage nach Anspruch 1, wobei:
das Steuermodul (3) die Vielzahl von Versorgungseinrichtungen (21, 22, 23) und die Vielzahl von Sprühvorrichtungen (51, 52, 53) steuert, um einen Eins-zu-eins-Arbeitsmodus auszubilden, eine Versorgungseinrichtung (21, 22, 23) eine Zuführflüssigkeit versorgt, und eine entsprechende Sprühvorrichtung (51, 52, 53) einen Sprühvorgang durchführt; oder
das Steuermodul (3) die Vielzahl von Versorgungseinrichtungen (21, 22, 23) und die Vielzahl von Sprühvorrichtungen (51, 52, 53) steuert, um einen Eins-zu-viele-Arbeitsmodus auszubilden, eine Versorgungseinrichtung (21, 22, 23) eine Zuführflüssigkeit versorgt, und entsprechende Mehrfachsprühvorrichtungen (51, 52, 53) einen Sprühvorgang durchführen.

5. Bewässerungsanlage nach Anspruch 1, wobei die Bewässerungsanlage (1) ferner ein Wasserversorgungsmodul (7) umfasst, das mit der Transportrohrleitung (4) zum Bereitstellen von Wasser an den Bewässerungsbereich (A, B, C) verbunden ist.

6. Bewässerungsanlage nach Anspruch 5, wobei das Steuermodul (3) das Wasserversorgungsmodul (7) und das Versorgungsmodul (2) steuert, um dem Bewässerungsbereich (A, B, C) Wasser oder/und die Zuführflüssigkeiten zu unterschiedlichen Zeiten oder gleichzeitig bereitzustellen, wobei optional das Steuermodul (3) ein erstes Ventil zum Steuern des Versorgungsmoduls (2), ein zweites Ventil zum Steuern des Wasserversorgungsmoduls (7) und eine Steuerschaltung oder Steuerchip umfasst und die Steuerschaltung oder der Steuerchip mit dem ersten Ventil und dem zweiten Ventil verbunden ist, um ein Öffnen und ein Schließen des ersten Ventils und des zweiten Ventils zu steuern.

7. Bewässerungsanlage nach Anspruch 1, wobei das Steuermodul (3) eine drahtlose Kommunikationseinrichtung umfasst, die konfiguriert ist, um eine drahtlose Kommunikation mit einem Mobilgerät (6) durchzuführen.

8. Bewässerungsanlage nach Anspruch 7, wobei das Steuermodul (3), durch Verwenden der drahtlosen Kommunikationseinrichtung, eine Steueranweisung empfängt, die durch das Mobilgerät (6) gesendet wird, und die Bewässerungsanlage (1) steuert, um gemäß der Steueranweisung zu arbeiten.

9. Bewässerungsanlage nach Anspruch 8, wobei die Steueranweisung umfasst: eine Bewässerungsstartanweisung und eine Bewässerungsendanweisung; oder
eine Anweisung zum automatischen Durchführen einer periodischen Bewässerung.

10. Bewässerungsanlage nach Anspruch 7, wobei das Steuermodul (3) Daten, die sich auf die Bewässerung beziehen, an das Mobilgerät (6) durch Verwenden der drahtlosen Kommunikationseinrichtung sendet, damit das Mobilgerät (6) Datenstatistiken und - analysen durchführt, wobei die Daten, die sich auf die Bewässerung beziehen, optional eine Zeitdauer der Bewässerung, eine Durchflusskapazität der Bewässerung, ein Datum der Bewässerung umfassen.

11. Bewässerungsanlage nach Anspruch 7, wobei das Sprühmodul (5) ferner eine drahtlose Kommunikationseinheit und eine Steuereinheit umfasst, wobei die Steuereinheit mit der drahtlosen Kommunikationseinheit beziehungsweise den Sprühvorrichtungen (51, 52, 53) verbunden ist, die drahtlose Kommunikationseinheit einen Steuerbefehl empfängt, der durch das Mobilgerät (6) gesendet wird, und die Steuereinheit die Sprühvorrichtungen (51, 52, 53) gemäß dem empfangenen Steuerbefehl steuert, um einen Sprühvorgang zu unterschiedlichen Zeiten oder gleichzeitig durchzuführen.

12. Bewässerungsanlage nach Anspruch 1, wobei das Steuermodul konfiguriert ist, um jede der Vielzahl von Sprühvorrichtungen (51, 52, 53), die mit dem Transportrohr der Transportrohrleitung verbunden sind, unabhängig zu steuern.

13. Verfahren zum Steuern einer Bewässerungsanlage (1), umfassend ein Versorgungsmodul (2), umfassend eine Vielzahl von Versorgungseinrichtungen (21, 22, 23) zum Speichern einer Vielzahl von Zuführflüssigkeiten; eine Transportrohrleitung (4), die mit dem Versorgungsmodul (2) zum Transport der Zuführflüssigkeiten verbunden ist, wobei die Transportrohrleitung (4) ein Transportrohr umfasst, das sich von dem Versorgungsmodul (2) zu einer Vielzahl von Bewässerungsbereichen (A, B, C) erstreckt; ein Sprühmodul (5), umfassend eine Vielzahl von Sprühvorrichtungen (51, 52, 53), die mit dem einen Transportrohr der Transportrohrleitung (4) verbunden und konfiguriert ist, um die Zuführflüssigkeiten auf einen Bewässerungsbereich (A, B, C) sprühen, wobei mindestens zwei Sprühvorrichtungen in einem bestimmten Abstand voneinander an unterschiedlichen Bewässerungsbereichen mit dem einen Transportrohr verbunden sind; und ein Steuermodul (3), das die Bewässerungsanlage (1) steuert, das Verfahren umfassend:
Steuern des Zuführmoduls (2), um eine erste Zuführflüssigkeit innerhalb eines ersten Zeitraums bereitzustellen und um eine zweite Zuführflüssigkeit innerhalb eines zweiten Zeitraums bereitzustellen, und Passieren der ersten Zuführflüssigkeit und der zweiten Zuführflüssigkeit durch ein gleiches Segment des einen Transportrohrs der Transportrohrleitung (4) hindurch zu unterschiedlichen Zeiten.

14. Verfahren zum Steuern einer Bewässerungsanlage nach Anspruch 13, wobei die Vielzahl von Sprühvorrichtungen (51, 52, 53) mindestens zwei Sprühvorrichtungen umfasst, wobei eine erste Sprühvorrichtung und eine zweite Sprühvorrichtung in einem bestimmten Abstand voneinander mit der Transportrohrleitung (4) verbunden sind; wobei die erste Sprühvorrichtung gesteuert wird, um die erste Zuführflüssigkeit innerhalb des ersten Zeitraums zu sprühen, und der zweite Sprühvorrichtung gesteuert wird, um die zweite Zuführflüssigkeit innerhalb des zweiten Zeitraums zu sprühen.

15. Verfahren nach Anspruch 13, wobei die Zuführflüssigkeit eine Nährlösung oder flüssiges Düngemittel oder flüssiges Pestizid umfasst.

16. Verfahren nach Anspruch 13, wobei das Steuermodul konfiguriert ist, um jede der Vielzahl von Sprühvorrichtungen (51, 52, 53), die mit dem Transportrohr der Transportrohrleitung verbunden ist, unabhängig zu steuern.

## Revendications

1. Système d'irrigation (1), comprenant :
un module d'alimentation (2), comprenant une pluralité d'appareils d'alimentation (21, 22, 23) pour stocker une pluralité de liquides d'acheminement ;
une conduite de transport (4), reliée au module d'alimentation (2) pour transporter les liquides d'acheminement, la conduite de transport (4) comprenant un tuyau de transport qui s'étend du module d'alimentation (2) à une pluralité de zones d'irrigation (A, B, C) pour transporter différents liquides d'acheminement depuis le module d'alimentation à travers un même segment d'un tuyau de transport vers la pluralité de zones d'irrigation ;
un module de pulvérisation (5), comprenant une pluralité de pulvérisateurs (51, 52, 53) reliés au tuyau de transport de la conduite de transport (4) pour pulvériser les liquides d'acheminement, au moins deux pulvérisateurs étant reliés au tuyau de transport au niveau à une certaine distance les uns des autres pour être situés dans différentes zones d'irrigation ;
un module de commande (3), pour commander le système d'irrigation (1), le module de commande (3) commandant le module d'alimentation (2) pour fournir différents liquides d'acheminement à différents moments à travers le tuyau de transport de sorte que les différents liquides d'acheminement passent à travers le même segment du tuyau de transport de la conduite de transport (4) à des moments différents et s'écoule vers une zone d'irrigation (A, B, C).

2. Système d'irrigation selon la revendication 1, dans lequel le module de commande (3) commande au moins deux de la pluralité de pulvérisateurs (51, 52, 53) pour pulvériser différents liquides d'acheminement à des moments différents, éventuellement les au moins deux de la pluralité des pulvérisateurs (51, 52, 53) étant reliés à la conduite de transport (4) à une certaine distance l'un de l'autre.

3. Système d'irrigation selon la revendication 1, dans lequel la conduite de transport (4) comprend une pluralité de tuyaux de transport de dérivation, le tuyau de transport est relié aux tuyaux de transport de dérivation respectivement, et le module de pulvérisation (5) est relié aux tuyaux de transport de dérivation.

4. Système d'irrigation selon la revendication 1, dans lequel :
le module de commande (3) commande la pluralité d'appareils d'alimentation (21, 22, 23) et la pluralité de pulvérisateurs (51, 52, 53) pour former un mode de travail un à un, un appareil d'alimentation (21, 22, 23) fournit un liquide d'acheminement, et un pulvérisateur correspondant (51, 52, 53) effectue une opération de pulvérisation ; ou
le module de commande (3) commande la pluralité d'appareils d'alimentation (21, 22, 23) et la pluralité de pulvérisateurs (51, 52, 53) pour former un mode de travail un à plusieurs, un appareil d'alimentation (21, 22, 23) fournit un liquide d'acheminement, et des pulvérisateurs multiples correspondants (51, 52, 53) effectuent une opération de pulvérisation.

5. Système d'irrigation selon la revendication 1, dans lequel le système d'irrigation (1) comprend en outre un module d'alimentation en eau (7), relié à la conduite de transport (4) pour fournir de l'eau à la zone d'irrigation (A, B, C).

6. Système d'irrigation selon la revendication 5, dans lequel le module de commande (3) commande le module d'alimentation en eau (7) et le module d'alimentation (2) pour fournir de l'eau ou/et les liquides d'acheminement à la zone d'irrigation (A, B, C) à des moments différents ou en même temps, éventuellement le module de commande (3) comprenant une première vanne pour commander le module d'alimentation (2), une seconde vanne pour commander le module d'alimentation en eau (7), et un circuit de commande ou puce de commande, et le circuit de commande ou la puce de commande étant reliée à la première vanne et à la seconde vanne pour commander l'ouverture et la fermeture de la première vanne et de la seconde vanne.

7. Système d'irrigation selon la revendication 1, dans lequel le module de commande (3) comprend un appareil de communication sans fil, configuré pour effectuer une communication sans fil avec un dispositif mobile (6).

8. Système d'irrigation selon la revendication 7, dans lequel le module de commande (3) reçoit, à l'aide de l'appareil de communication sans fil, une instruction de commande envoyée par le dispositif mobile (6) et commande le système d'irrigation (1) pour qu'il fonctionne selon l'instruction de commande.

9. Système d'irrigation selon la revendication 8, dans lequel l'instruction de commande comprend : une instruction de début d'irrigation et une instruction de fin d'irrigation ; ou
une instruction pour effectuer automatiquement une irrigation périodique.

10. Système d'irrigation selon la revendication 7, dans lequel le module de commande (3) envoie des données relatives à l'irrigation au dispositif mobile (6) à l'aide de l'appareil de communication sans fil, pour que le dispositif mobile (6) effectue des statistiques et une analyse de données, les données relatives à l'irrigation comprenant éventuellement une durée d'irrigation, une capacité de débit d'irrigation, une date d'irrigation.

11. Système d'irrigation selon la revendication 7, dans lequel le module de pulvérisation (5) comprend en outre une unité de communication sans fil et une unité de commande, l'unité de commande est connectée à l'unité de communication sans fil et aux pulvérisateurs (51, 52, 53) respectivement, l'unité de communication sans fil reçoit une commande de contrôle envoyée par le dispositif mobile (6), et l'unité de commande des pulvérisateurs (51, 52, 53), selon la commande de contrôle reçue, pour effectuer une opération de pulvérisation à un moment différent ou en même temps.

12. Système d'irrigation selon la revendication 1, dans lequel le module de commande est configuré pour commander indépendamment chacun de la pluralité de pulvérisateurs (51, 52, 53) reliés au tuyau de transport de la conduite de transport.

13. Procédé de commande d'un système d'irrigation (1) comprenant un module d'alimentation (2), comprenant une pluralité d'appareils d'alimentation (21, 22, 23) pour stocker une pluralité de liquides d'acheminement ; une conduite de transport (4), reliée au module d'alimentation (2) pour transporter les liquides d'acheminement, la conduite de transport (4) comprenant un tuyau de transport qui s'étend du module d'alimentation (2) à une pluralité de zones d'irrigation (A, AVANT JC) ; un module de pulvérisation (5), comprenant une pluralité de pulvérisateurs (51, 52, 53) reliés au tuyau de transport de la conduite de transport (4) et conçus pour pulvériser les liquides d'acheminement vers une zone d'irrigation (A, B, C), au moins deux pulvérisateurs sont reliés à un tuyau de transport à une certaine distance l'un de l'autre dans différentes zones d'irrigation ; et un module de commande (3), commandant le système d'irrigation (1), le procédé comprenant :
la commande du module d'alimentation (2) pour fournir un premier liquide d'acheminement dans une première période de temps et pour fournir un second liquide d'acheminement dans une seconde période de temps, et faire passer le premier liquide d'acheminement et le second liquide d'acheminement à travers un même segment d'un tuyau de transport de la conduite de transport (4) à des moments différents.

14. Procédé de commande d'un système d'irrigation selon la revendication 13, dans lequel la pluralité de pulvérisateurs (51, 52, 53) comprend au moins deux pulvérisateurs, un premier pulvérisateur et un second pulvérisateur sont reliés à la conduite de transport (4) à une certaine distance de chacun d'eux ; le premier pulvérisateur étant commandé pour pulvériser le premier liquide d'acheminement dans la première période de temps, et le second pulvérisateur étant commandé pour pulvériser le second liquide d'acheminement dans la seconde période de temps.

15. Procédé selon la revendication 13, dans lequel le liquide d'acheminement comprend une solution nutritive ou un engrais liquide ou un pesticide liquide.

16. Procédé selon la revendication 13, dans lequel le module de commande est configuré pour commander indépendamment chacun de la pluralité de pulvérisateurs (51, 52, 53) reliés au tuyau de transport de la conduite de transport.
